# EUROPEAN PATENT APPLICATION

(11) **EP 2 818 706 A1**
(43) Date of publication of application: **31.12.2014**
(21) Application number: 14173416.0
(22) Date of filing: 23.06.2014
(51) Int. Cl.: F04B 27/08, F04B 35/04, F04C 23/00, F04B 39/12, H02K 11/00

(54) **Motor-driven compressor**

(30) Priority: 25.06.2013 JP 2013132614
(71) Applicant: Kabushiki Kaisha Toyota Jidoshokki, Kariya-shi, Aichi-ken (JP)
(72) Inventor: Yano, Junya, Aichi-ken (JP); Fujii, Akio, Aichi-ken (JP); Takahata, Junichi, Aichi-ken (JP)
(74) Representative: Hoffmann Eitle

(57) **Abstract**

A motor-driven compressor includes a motor driving circuit including a capacitor electrically connected through a lead to a circuit board, and a capacitor holder that is made of a plastic and holds the capacitor. The capacitor holder includes a side wall, which covers a side surface of the capacitor. The lead protrudes from the side surface. The side wall includes a through-hole, which opens through each of a first end surface of the side wall facing the circuit board and a second end surface of the side wall opposite to the circuit board and guides the lead to a portion of the circuit board to which the lead is to be connected. The side wall includes a wall surface facing the capacitor. The wall surface includes a slit, which is continuous with the through-hole and opens opposite to the circuit board.

## Description

### BACKGROUND OF THE INVENTION

The present invention relates to a motor-driven compressor that includes a compression unit, which compresses refrigerant, an electric motor, which drives the compression unit, and a motor driving circuit, which drives the electric motor.

Japanese Laid-Open Patent Publication No. 2007-263061 describes an example of such a motor-driven compressor. The motor-driven compressor includes a motor driving circuit, which includes a planer circuit board and a plurality of electric components of various types. The electric components, which are electrically connected to the circuit board, include a switching element and a plurality of capacitors, for example. The capacitors are provided on the circuit board. Each capacitor includes protruding leads and is electrically connected to the circuit board through the leads. The capacitors are held by a capacitor holder.

If the capacitors are arranged such that the protruding direction of the leads is perpendicular to the mounting surface of the circuit board, on which various types of the electric components are mounted, the size of the motor-driven compressor is increased in the direction perpendicular to the mounting surface of the circuit board. Accordingly, the capacitors may be arranged such that the protruding direction of the leads is in parallel with the mounting surface of the circuit board, and the leads are bent toward the mounting surface of the circuit board. This reduces the size of the motor-driven compressor in the direction perpendicular to the mounting surface of the circuit board in comparison to the case where the leads are not bent and the capacitors are arranged such that the protruding direction of the leads is perpendicular to the mounting surface of the circuit board.

However, the positions of the leads at which the bent portions are formed vary between the capacitors during the bending process of the leads. Accordingly, when the leads of each capacitor and the circuit board are connected to each other in the state where the capacitor is held by the capacitor holder, the positions of the leads, which extend toward the mounting surface of the circuit board, may be shifted with respect to portions of the circuit board to which the leads are to be connected. This makes a connection operation between the leads of each capacitor and the circuit board difficult.

### SUMMARY OF THE INVENTION

Accordingly, it is an objective of the present invention to provide a motor-driven compressor that facilitates the connection operation between the leads of each capacitor and the circuit board.

To achieve the foregoing object, a motor-driven compressor including: a compression unit, an electric motor, a housing, a motor driving circuit, and a capacitor holder is provided. The compression unit is adapted to compress refrigerant. The electric motor is adapted to drive the compression unit. The housing accommodates the compression unit and the electric motor. The motor driving circuit is adapted to drive the electric motor and includes a circuit board and a capacitor. The capacitor is electrically connected through a lead to the circuit board. The capacitor holder is made of a plastic and holds the capacitor. The capacitor holder includes a side wall, which covers a side surface of the capacitor. The lead protrudes from the side surface. The side wall includes a through-hole, which opens through each of a first end surface of the side wall facing the circuit board and a second end surface of the side wall opposite to the first end surface. The through-hole guides the lead toward a portion of the circuit board to which the lead is to be connected. The side wall includes a wall surface facing the capacitor, and the side wall includes a slit in the wall surface, which is continuous with the through-hole and opens opposite to the circuit board.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a partial cross-sectional view showing a motor-driven compressor of one embodiment;
Fig. 2 is an exploded perspective view showing film capacitors and a capacitor holder;
Fig. 3 is a perspective view showing the capacitor holder, which holds the film capacitors, and a circuit board; and
Fig. 4 is a longitudinal cross-sectional view showing a part of the film capacitor and a part of the capacitor holder.

### DETAILED DESCRIPTION OF THE PREFERRED EMBODIMENTS

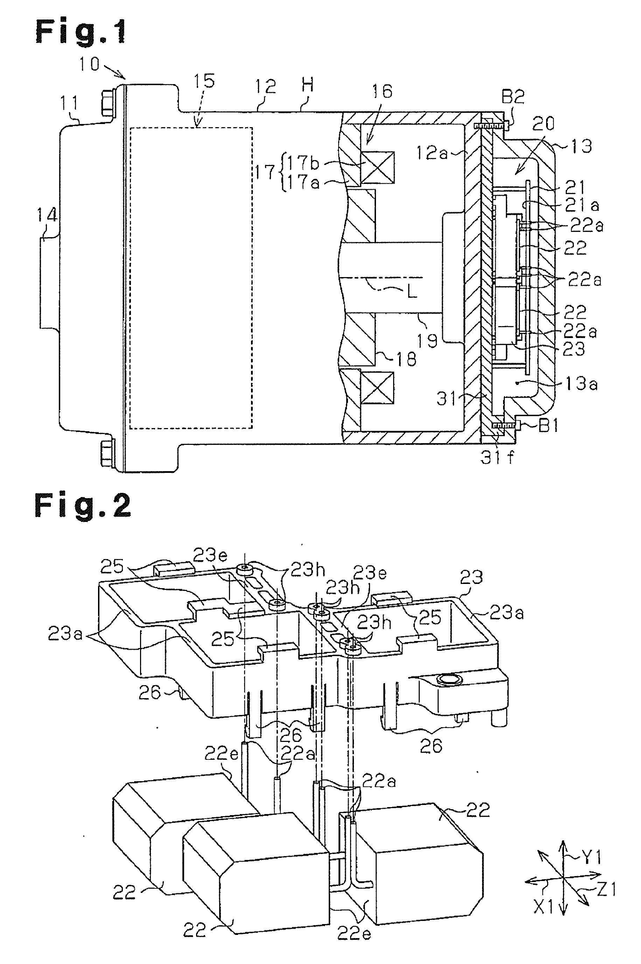

Referring to Figs. 1 to 4, one embodiment will now be described. As shown in Fig. 1, a motor-driven compressor 10 includes a housing H. The housing H includes a discharge housing member 11, a suction housing member 12, and a cover 13, which are made of a metal, preferably aluminum. The discharge housing member 11, the suction housing member 12, and the cover 13 are cylindrical and each include a closed end. The suction housing member 12 is coupled to the discharge housing member 11. The suction housing member 12 has a circumferential wall including a suction port (not shown) connected to an external refrigerant circuit (not shown). The discharge housing member 11 includes a discharge port 14 connected to the external refrigerant circuit. The suction housing member 12 accommodates a compression unit 15 (indicated by the broken lines in Fig. 1), which compresses refrigerant, and an electric motor 16, which drives the compression unit 15. Although not shown in the drawings, the compression unit 15 of the present embodiment includes a fixed scroll, which is fixed in the suction housing member 12, and a movable scroll, which is engaged with the fixed scroll.

A stator 17 is fixed to the inner surface of the suction housing member 12. The stator 17 includes a stator core 17a, which is fixed to the inner surface of the suction housing member 12, and coils 17b, which are wound around teeth (not shown) of the stator core 17a. A rotatable rotation shaft 19 extends through the stator 17 in the suction housing member 12. A rotor 18 is fixed to the rotation shaft 19.

The suction housing member 12 has an end wall 12a to which the cover 13 is coupled. A planar coupling base 31 is arranged between the suction housing member 12 and the cover 13. The coupling base 31 is made of a metal, preferably aluminum. The coupling base 31 is coupled to the end wall 12a of the suction housing member 12. The coupling base 31 is thermally coupled to the suction housing member 12.

The cover 13 and the coupling base 31 define an accommodation chamber 13a in the housing H. The accommodation chamber 13a accommodates a motor driving circuit 20 that drives the electric motor 16. In the present embodiment, the compression unit 15, the electric motor 16, and the motor driving circuit 20 are arranged in this order along the axis L of the rotation shaft 19 (in the axial direction).

The electric motor 16 is supplied with power that is controlled by the motor driving circuit 20. This rotates the rotor 18 and the rotation shaft 19 at a controlled rotation speed and drives the compression unit 15. The driving of the compression unit 15 draws refrigerant from the external refrigerant circuit into the suction housing member 12 through the suction port, compresses the refrigerant in the suction housing member 12 with the compression unit 15, and discharges the compressed refrigerant to the external refrigerant circuit through the discharge port 14.

The motor driving circuit 20 includes a flat circuit board 21 and a plurality of electric components of various types, which are electrically connected to the circuit board 21. The circuit board 21 is arranged in the accommodation chamber 13a such that a mounting surface 21a of the circuit board 21 on which the electric components are arranged is perpendicular to the axis of the rotation shaft 19. The electric components include film capacitors 22, for example. The motor driving circuit 20 includes a plurality of film capacitors 22. Each film capacitor 22 includes a flat, rectangular casing. Each film capacitor 22 includes a side surface 22e, from which leads 22a protrude. The leads 22a electrically connect the film capacitor 22 to the circuit board 21.

A plastic capacitor holder 23 holds the film capacitors 22. The capacitor holder 23, which holds the film capacitors 22, is coupled to the side of the coupling base 31 that is opposite to the end wall 12a of the suction housing member 12.

A plurality of bosses 31f (only one shown in Fig. 1) projects from the surface of the coupling base 31 that is opposite to the end wall 12a of the suction housing member 12. Bolts B1 are inserted through the cover 13 and engaged with the corresponding bosses 31f to fasten the coupling base 31 to the cover 13. Accordingly, the cover 13, the coupling base 31, and the motor driving circuit 20 are combined to form a module. A bolt B2 fastens the cover 13, which is combined with the coupling base 31 and the motor driving circuit 20, to the suction housing member 12.

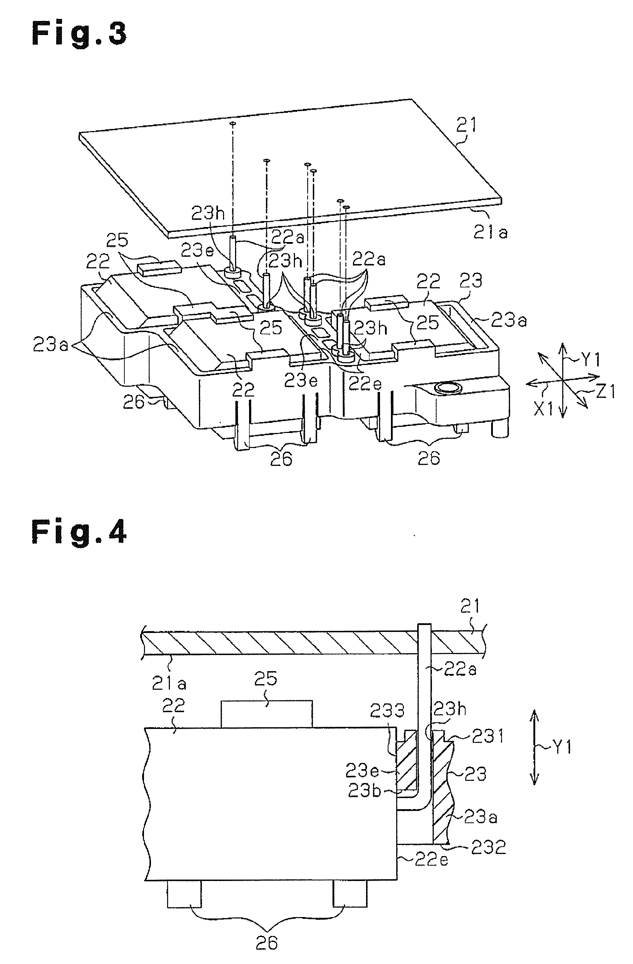

As shown in Figs. 2 and 3, each film capacitor 22 is arranged such that the projection direction (the direction of arrow X1) of the leads 22a from the side surface 22e and the mounting surface 21a of the circuit board 21 are parallel with each other. Each lead 22a is bent toward the mounting surface 21a of circuit board 21.

The capacitor holder 23 includes a plurality of accommodation portions 23a, each of which accommodates the corresponding film capacitor 22. Each accommodation portion 23a includes a hollowed polygonal shape having a side wall 23e as one side, which covers the corresponding side surface 22e of the film capacitor 22 such that the accommodation portion 23a surrounds four sides of the corresponding film capacitor 22.

As shown in Fig. 4, the side wall 23e of the capacitor holder 23 includes a plurality of through-holes 23h, which open through each of the first end surface 231 of the side wall 23e facing the circuit board 21 and the second end surface 232 of the side wall 23e opposite to the first end surface 231 and guide the corresponding leads 22a toward the portions of the circuit board 21 to which the leads 22a are to be connected.

As shown in Figs. 2 and 3, each accommodation portion 23a of the capacitor holder 23 includes a plurality of first retaining pieces 25. The first retaining pieces 25 extend at positions facing the circuit boards 21, and engage with the end surface of the corresponding film capacitor 22 opposite to the coupling base 31. The accommodation portion 23a of the capacitor holder 23 also includes a plurality of second retaining pieces 26. The second retaining pieces 26 extend at positions opposite to the circuit board 21, and engage with the other end surface of the corresponding film capacitor 22 facing the coupling base 31.

Two of the film capacitors 22 that are adjacent to each other are held by the capacitor holder 23 such that the side surfaces 22e, from which the leads 22a protrude, face each other. The side wall 23e positioned between the side surfaces 22e that are arranged facing each other includes the through-holes 23h corresponding to each of the film capacitors 22 that are adjacent to each other. The first end surface 231 of each side wall 23e includes the openings of the through-holes 23h corresponding to one of the film capacitors 22 that are adjacent to each other. The openings are arranged on the same straight line. The film capacitors 22 that are adjacent to each other are arranged shifted from each other in the direction in which the openings of the through-holes 23h are arranged (direction of arrow Z1).

As shown in Fig. 4, the side wall 23e includes a wall surface 233 facing the film capacitor 22. The wall surface 233 includes a slit 23b, which is continuous with the through-holes 23h and extend toward the circuit board 21 from a portion of the side wall 23e opposite to the circuit board 21. The slit opens opposite to the circuit board. The basal portion of each lead 22a with respect to the bent portion can extend through the slit 23b. Each film capacitor 22 is inserted into the corresponding accommodation portion 23a in the extended direction, in which the leads 22a extend toward the mounting surface 21a of the circuit board 21 (direction of arrow Y1). The leads 22a, which extend toward the mounting surface 21a of the circuit board 21, then extend through the corresponding through-holes 23h and are guided to the corresponding portions of the circuit board 21 to which the leads 22a are to be connected. Further, the basal portion of each lead 22a with respect to the bent portion extends through the slit 23b and is covered by the capacitor holder 23. Each film capacitor 22 is held between the first retaining pieces 25 and the second retaining pieces 26. This maintains the state where the accommodation portions 23a accommodate the corresponding film capacitors 22.

The operation of the present embodiment will now be described.

Each lead 22a extends from the side surface 22e of the corresponding film capacitor 22, and its basal portion with respect to the bent portion extends through the slit 23b. Each lead 22a, which extends toward the mounting surface 21a of the circuit board 21, extends through the corresponding through-hole 23h. This maintains the film capacitors 22 in the capacitor holder 23 in the state where the leads 22a, which extend toward the mounting surface 21a of the circuit board 21, are positioned at the corresponding portions of the circuit board 21 to which the leads 22a are to be connected. This facilitates the operation of coupling the leads 22a of each film capacitor 22 to the circuit board 21 in the state where the film capacitors 22 are held by the capacitor holder 23.

Further, the leads 22a, which extend toward the mounting surface 21a of the circuit board 21, extend through the corresponding through-holes 23h. This limits the bending of the leads 22a, which extend toward the mounting surface 21a of the circuit board 21, when coupling the leads 22a of each film capacitor 22 to the circuit board 21. This reduces the stress acting on the leads 22a.

The advantages of the present embodiment will now be described.
(1) Each side wall 23e of the capacitor holder 23 includes the through-holes 23h, which open through each of the first end surface 231 facing the circuit board 21 and the second end surface 232 opposite to the first end surface 231, and guide the corresponding leads 22a toward the portions of the circuit board 21 to which the leads 22a are to be connected. Further, the side wall 23e includes the wall surface 233 facing the corresponding film capacitor 22. The wall surface 233 includes the slit 23b, which is continuous with the through-holes 23h and opens opposite to the circuit board 21. The leads 22a, which extend from the side surface 22e of the corresponding film capacitor 22, extend through the slit 23b. The leads 22a, which extend toward the mounting surface 21a of the circuit board 21, extend through the corresponding through-holes 23h. This maintains the film capacitors 22 in the capacitor holder 23 in the state where the leads 22a, which extend toward the circuit board 21, are positioned at the corresponding portions of the circuit board 21 to which the leads 22a are to be connected. This facilitates the operation of coupling the leads 22a of each film capacitor 22 to the circuit board 21 in the state where the film capacitors 22 are held by the capacitor holder 23.
(2) Each film capacitor 22 has a substantially box shape, and the capacitor holder 23 has a polygonal shape having the side wall 23e and hollow, rectangular sections such that the capacitor holder 23 surrounds four sides of each film capacitor 22. According to this, the four sides of each film capacitor 22 are surrounded by the capacitor holder 23 formed in the hollowed polygonal shapes each having the side wall 23e as one side. This ensures that the film capacitors 22 are held by the capacitor holder 23.
(3) The motor driving circuit 20 includes a plurality of the film capacitors 22, and the capacitor holder 23 holds the film capacitors 22. Accordingly, the single capacitor holder 23 positions the leads 22a of the film capacitors 22, which extend toward the circuit board 21, at the corresponding portions of the circuit board 21 to which the leads 22a are to be connected. This facilitates the operation of coupling the leads 22a of the film capacitors 22 to the circuit board 21.
(4) The side wall 23e of the capacitor holder 23 includes the through-holes 23h corresponding to an adjacent pair of the film capacitors 22. Accordingly, the through-holes 23h corresponding to the adjacent pair of the film capacitors 22 are formed in the single side wall 23e. This reduces the size of the capacitor holder 23 and simplifies the configuration in comparison to the case where the through-holes 23h corresponding to the adjacent pair are formed in separate side walls.
(5) The first end surface 231 of each side wall 23e of the capacitor holder 23 includes the openings of the through-holes 23h corresponding to one of the film capacitors 22 that are adjacent to each other. The openings are arranged on the same straight line. The film capacitors 22 that are adjacent to each other are shifted with respect to each other in the direction in which the openings of the through-holes 23h are arranged. This limits the interference between the leads 22a of the film capacitors 22 that are adjacent to each other and brings the film capacitors 22 that are adjacent to each other as close as possible. This reduces the size of the capacitor holder 23, contributing the reduction of the size of the motor-driven compressor 10.
(6) According to the present embodiment, the capacitor holder 23 covers the basal portion of each lead 22a with respect to the bent portion. This facilitates the achievement of the insulation of the lead 22a in comparison to the case where the basal portion of each lead 22a with respect to the bent portion is exposed from the capacitor holder 23.
(7) The capacitor holder 23 covers the basal portion of each lead 22a with respect to the bent portion by inserting the basal portion into the slit 23b. This facilitates the achievement of the insulation between the leads 22a even when the leads 22a that protrude from each film capacitor 22 and are adjacent to each other are brought close to each other. This brings the leads 22a that protrude from each film capacitor 22 and are adjacent to each other as close as possible so that the size of the capacitor holder 23 is reduced.

The above described embodiment may be modified as follows.

In the embodiment, the basal portion of each lead 22a with respect to the bent portion may be exposed from the capacitor holder 23.

In the embodiment, the through-holes 23h may be formed in the side wall 23e such that the openings of the through-holes 23h each corresponding to one of the film capacitors 22 that are adjacent to each other are arranged in the protruding direction (direction of arrow X1) of the leads 22a from the side surface 22e of each film capacitor 22.

In the embodiment, the through-holes 23h each corresponding to one of the film capacitors 22 that are adjacent to each other may be formed in separate side walls.

In the embodiment, the capacitor holder 23 may be configured to hold a single film capacitor 22.

In the embodiment, the number of the film capacitor 22 is not particularly limited. That is, the number may be appropriately changed.

In the embodiment, the capacitors may include an electrolytic capacitor, for example.

In the embodiment, the motor driving circuit 20 may be located radially outward of the rotation shaft 19.

In the embodiment, the compression unit 15 may be of a piston type or a vane type, for example.

Therefore, the present examples and embodiments are to be considered as illustrative and not restrictive and the invention is not to be limited to the details given herein, but may be modified within the scope and equivalence of the appended claims.

## Claims

1. A motor-driven compressor, comprising:
a compression unit (15) adapted to compress refrigerant;
an electric motor (16) adapted to drive the compression unit (15);
a housing (H) that accommodates the compression unit (15) and the electric motor (16);
a motor driving circuit (20) that is adapted to drive the electric motor (16) and includes a circuit board (21) and a capacitor (22), wherein the capacitor (22) is electrically connected through a lead (22a) to the circuit board (21); and
a capacitor holder (23) that is made of a plastic and holds the capacitor (22),
the motor-driven compressor being **characterized in that**
the capacitor holder (23) includes a side wall (23e), which covers a side surface of the capacitor (22), wherein the lead (22a) protrudes from the side surface,
the side wall (23e) includes a through-hole (23h), which opens through each of a first end surface (231) of the side wall (23e) facing the circuit board (21) and a second end surface (232) of the side wall (23e) opposite to the first end surface (231), wherein the through-hole (23h) guides the lead (22a) toward a portion of the circuit board (21) to which the lead (22a) is to be connected, and
the side wall (23e) includes a wall surface (233) facing the capacitor (22), and the side wall (23e) includes a slit (23b) in the wall surface (233), which is continuous with the through-hole (23h) and opens opposite to the circuit board (21).

2. The motor-driven compressor according to claim 1, wherein
the capacitor (22) has a substantially box shape, and
the capacitor holder (23) has a hollowed polygonal shape having the side wall (23e) as one side such that the capacitor holder (23) surrounds four sides of the capacitor (22).

3. The motor-driven compressor according to claim 2, wherein
the capacitor (22) of the motor driving circuit (20) is one of a plurality of capacitors (22), and
the capacitor holder (23) holds the capacitors (22).

4. The motor-driven compressor according to claim 3, wherein the through-hole (23h) is one of a plurality of through-holes (23h), and the through-holes (23h) each correspond to an adjacent pair of the capacitors (22).

5. The motor-driven compressor according to claim 4, wherein
the first end surface (231) of the side wall (23e) includes openings of the through-holes (23h) each corresponding to an adjacent pair of the capacitors (22), wherein the openings of the through-holes (23h) are arranged on the same straight line, and
the capacitors (22) in each adjacent pair are arranged shifted from each other in a direction in which the openings of the through-holes (23h) are arranged.

6. The motor-driven compressor according to any one of claims 1 to 5, wherein the capacitor is a film capacitor (22).

7. The motor-driven compressor according to any one of claims 1 to 5, further comprising a rotation shaft (19) that is accommodated in the housing (H) and rotated integrally with a rotor (18) of the electric motor (16), wherein
the compression unit (15), the electric motor (16), and the motor driving circuit (20) are arranged in this order along an axis (L) of the rotation shaft (19).
